# EUROPEAN PATENT APPLICATION

(11) **EP 3 491 911 A1**
(43) Date of publication of application: **05.06.2019**
(21) Application number: 17833944.6
(22) Date of filing: 27.06.2017
(51) Int. Cl.: A01G 9/24, A01G 7/00, A01G 7/02, A01G 9/18, A01G 31/00

(54) **HYDROPONIC APPARATUS AND HYDROPONIC METHOD**

(30) Priority: 29.07.2016 JP 2016149929
(71) Applicant: Panasonic Intellectual Property Management Co., Ltd., Osaka-shi, Osaka 540-6207 (JP)
(72) Inventor: ABE, Erika, Osaka-shi, Osaka 540-6207 (JP); YANO, Hiroshi, Osaka-shi, Osaka 540-6207 (JP)
(74) Representative: Müller-Boré & Partner Patentanwälte PartG mbB
(86) International application number: PCT/JP2017/023550
(87) International publication number: WO 2018/020935

(57) **Abstract**

A hydroponic cultivation apparatus (100) includes: a growth tank (1) in which a plant (11) is grown; an air blower (3) which supplies wind; and an air blowing pipe (4) which guides the wind sent from the air blower (3) to the plant (11). The air blowing pipe (4) includes a first pipe (4a) and a second pipe (4b) which extend in the same virtual line, and each of the first pipe (4a) and the second pipe (4b) is provided with a plurality of air outlet holes (41) in a pipe longitudinal direction and supplies the wind from the air outlet holes (41) to the plant (11). The air blower (3) supplies the wind such that a direction of the wind inside the first pipe (4a) and a direction of the wind inside the second pipe (4b) are opposite directions.

## Description

### TECHNICAL FIELD

The present invention relates to what is called a hydroponic cultivation apparatus and a hydroponic cultivation method for cultivating a plant by soaking roots of the plant in water without use of soil.

### BACKGROUND ART

There are conventionally known methods for hydroponic cultivation which uniformly supply all plants with air to promote the growth of the plants (for example, Patent Literature 1).

Patent Literature 1 discloses a technique of sending air toward the upper and lower portions of plants and circulating the air in a room with a fan.

### CITATION LIST

### PATENT LITERATURE

Patent Literature 1: Japanese Patent Application Publication No. 2012-000028

### SUMMARY OF INVENTION

However, the direction in which air is sent is only one direction in the conventional plant growth facility described above. For this reason, the air could fail to be sent throughout the facility depending on the size of the facility, resulting in stagnant circulation of the air. This makes it impossible to uniformly supply all plants with air, which incurs a risk that the plants in the facility grow at different rates depending on the positions of the plants.

The present invention has been made to solve the above problem. It is an object of the present invention to provide a hydroponic cultivation apparatus and a hydroponic cultivation method for enhancing the uniformity of the degree of growth of a plurality of plants regardless of the positions of the plants by uniformly sending air in any size of the facility.

For the purpose of achieving the above object, an aspect of the hydroponic cultivation apparatus according to the present invention includes: a growth tank in which a plant is grown; an air blower which supplies wind; and an air blowing pipe which guides the wind sent from the air blower to the plant. The air blowing pipe includes a first pipe and a second pipe both of which extend in the same virtual line, each of the first pipe and the second pipe is provided with a plurality of air outlet holes in a pipe longitudinal direction and supplies wind from the air outlet holes to the plant, and the air blower supplies the wind such that a direction of the wind inside the first pipe and a direction of the wind inside the second pipe are opposite directions.

In addition, an aspect of the hydroponic cultivation method according to the present invention is a hydroponic cultivation method using a hydroponic cultivation apparatus which includes a growth tank in which a plant is grown; an air blower which supplies wind; and an air blowing pipe which guides wind sent from the air blower to the plant, in which the air blowing pipe includes a first pipe and a second pipe both of which extend in the same virtual line, each of the first pipe and the second pipe is provided with a plurality of air outlet holes in a pipe longitudinal direction, and the air blower supplies the wind to the plant, the method including the step of guiding the wind to the plant by the air blower such that a direction of the wind inside the first pipe and a direction of the wind inside the second pipe are opposite to each other.

### EFFECT OF INVENTION

The hydroponic cultivation apparatus and the hydroponic cultivation method of the present invention make it possible to uniformly send air to all plants and to enhance the uniformity of the degree of growth of a plurality of plants regardless of the positions of the plants.

### BRIEF DESCRIPTION OF DRAWINGS

Fig. 1 is a cross-sectional view illustrating an overall outline of a hydroponic cultivation apparatus 100 in an embodiment of the present invention.
Fig. 2 is an enlarged cross-sectional view of a main part of the hydroponic cultivation apparatus 100.

### DESCRIPTION OF EMBODIMENTS

Hereinafter, a description is provided for a hydroponic cultivation apparatus 100 of an embodiment of the present invention with reference to the drawings.

The hydroponic cultivation apparatus 100 performs hydroponic cultivation without use of soil in order to grow a plant 11.

### [Plant Cultivated by Hydroponic Cultivation Apparatus]

Examples of the plant 11 cultivated using the hydroponic cultivation apparatus 100 of the present embodiment include root vegetables such as Panax ginseng (Goryeo ginseng or Korean ginseng). Note that plants which can be cultivated by the hydroponic cultivation apparatus 100 are not limited to these.

The hydroponic cultivation apparatus 100 of the present embodiment is suitable for hydroponic cultivation of root-perennial plants. The root-perennial plants refer to some of the perennial plants 11 whose aboveground parts wither in a period unsuitable for growth (usually winter but sometimes summer) but, after that period, germinate and begin to grow again.

### [Structure of Hydroponic Cultivation Apparatus in Present Embodiment]

A description is provided for the hydroponic cultivation apparatus 100 in the present embodiment with reference to the drawings.

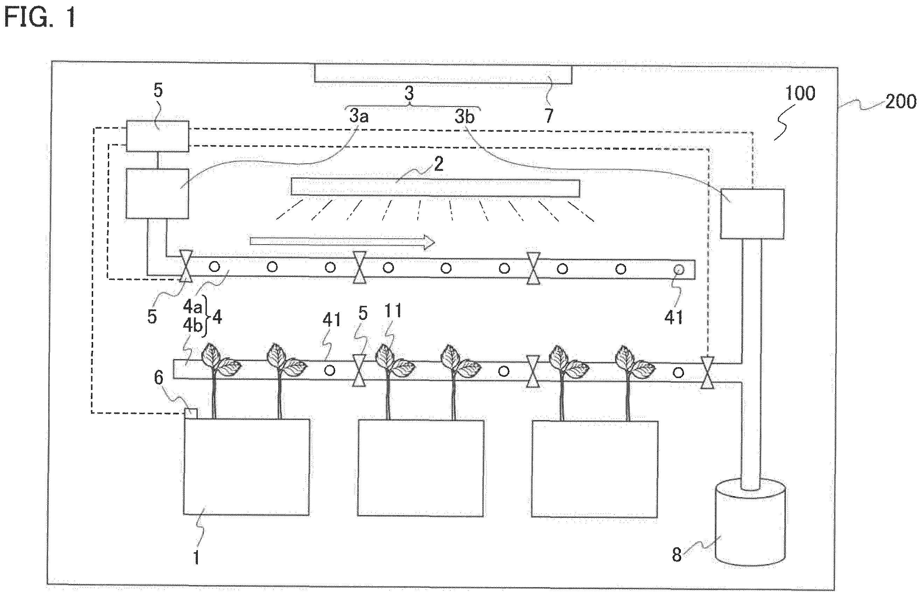

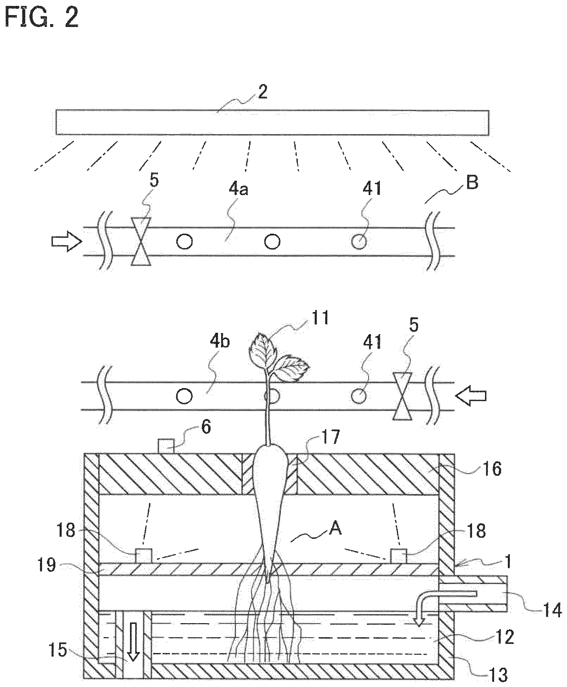

As illustrated in Fig. 1 and Fig. 2, the hydroponic cultivation apparatus 100 of the embodiment is disposed in a housing 200. The housing 200 is a structure having an internal space such as a container or a shed. The housing 200 is provided with a door (not illustrated), and the cultivator can enter the housing 200 by opening and closing the door. The space inside the housing 200 is the aboveground space B of the hydroponic cultivation apparatus 100.

The hydroponic cultivation apparatus 100 of the present embodiment includes a growth tank 1, an illumination 2, an air blower 3, air blowing pipes 4, and an air blow controller 5.

The housing 200 includes a plurality of growth tanks 1. Each of the growth tanks 1 is a tank having a partially open upper portion and has a cultivation section 13, a ground surface section 16, and spraying units 18 as illustrated in Fig. 2.

The cultivation section 13 has a box shape and has water or nutrient solution 12 stored in the bottom portion thereof. The cultivation section 13 includes a discharge pipe 15 for discharging water or the nutrient solution 12. The side wall of the cultivation section 13 has a supply pipe 14 connected thereto, and water or the nutrient solution 12 is supplied from this supply pipe 14 such that the plant 11 is constantly immersed in water or the nutrient solution 12. The ground surface section 16 is a plate-shaped member which has a through hole allowing the insertion of a medium 17 for hydroponic cultivation. In addition, this ground surface section 16 is installed to the cultivation section 13 so as to cover the upper opening portion of the cultivation section 13. The plant 11 is held in the through hole of the ground surface section 16 via the medium 17 and is positioned above the water or the nutrient solution 12 inside the cultivation section 13.

The medium 17 provided in the ground surface section 16 is, for example, a sponge disposed to surround the underground part of the plant 11 and being capable of retaining the permeated water. The medium 17 is formed in the shape of a cylinder around the plant 11. The plant 11 is supported by the frictional force between the plant 11 and the sponge. The sponge making up the medium 17 is capable of elastic deformation depending on the size of the growing plant 11.

The ground surface section 16 serves as a partition between the underground space A where the underground part of the plant 11 grows and the aboveground space B where the aboveground part of the plant 11 grows. Although the ground surface section 16 is a plate-shaped member, the ground surface section 16 may have any shape as long as it can hold the medium 17 for hydroponic cultivation so as to position the plant 11 above the water or the nutrient solution 12. The ground surface section 16 is preferably formed of a material such as expanded polystyrene foam from the viewpoint of reducing weight.

The cultivation section 13 and the ground surface section 16 form a housing having the underground space A where the underground part of the plant 11 grows. The underground space A is separated from the aboveground space B and stores water or the nutrient solution 12 so as to immerse the roots of the plant 11. For this reason, the entry and the exit of the atmosphere between the underground space A and the aboveground space B is suppressed as a whole.

Each of the spraying units 18 is disposed in the underground space A and sprays water or the nutrient solution 12 in the form of mist toward the plant 11 in the cultivation section 13. The spraying unit 18 is connected to a liquid supply pipe (not illustrated). The spraying unit 18 supplies water or the nutrient solution 12 to the plant 11 by spraying the water or the nutrient solution 12 supplied from the liquid supply pipe. The spraying unit 18 is controlled by a controller (not illustrated). Examples of the spraying method include ultrasonic mist or a spraying method which uses a high-pressure gas. Moreover, the spraying method may be a one-fluid type mist method although the spraying method is desirably a method employing two-fluid type mist. The spraying method may be in any form as long as it can supply water or the nutrient solution 12 to the plant.

The spraying unit 18 is provided on an attachment section 19 in a thin-plate shape provided to extend horizontally between the inner walls of the cultivation section 13. Note that the attachment section 19 may be provided at any height in the cultivation section 13 as long as the spraying units 18 can supply water or the nutrient solution 12 to the main roots of the plant 11. One or more spraying units 18 are attached to the attachment section 19.

The illumination 2, provided above the plant 11 in the aboveground space B, emits light. The leaves of the plant 11 are capable of photosynthesis by receiving light from the illumination because they protrude upward from the medium 17 for hydroponic cultivation. Although illumination 2 includes a plurality of LEDs (Light Emitting Diodes) in the present embodiment, it may be a fluorescent lamp as long as the illumination is a light source.

The air blower 3 supplies wind to the aboveground space B through the air blowing pipes 4. The air blower 3 is, for example, an air conditioning fan or a blower, or may be one capable of introducing the air outside and near the housing 200. The air blow controller 5 controls the air blower 3 to supply wind to the air blowing pipe 4. The wind in the present embodiment is assumed to be the air in the atmosphere containing carbon dioxide.

In addition, the air blower 3 may further be provided with a carbon dioxide supplier 8. The air blower 3 provided with the carbon dioxide supplier 8 can supply more air useful for synthesis of the plant 11 to promote the growth of the plant 11.

The air blowing pipes 4 include a first pipe 4a and a second pipe 4b which are two cylindrical members which guide air into the aboveground space B and one end of each of which is connected to the air blower 3. The air blowing pipes 4 have a plurality of air outlet holes 41 provided at predetermined intervals. The air blow controller 5 controls the air sent from the air blower 3 into the air blowing pipes 4. The air sent in is supplied into the aboveground space B and to the plant 11 through the air outlet holes 41. The air outlet holes 41 are provided at predetermined intervals in the longitudinal direction of the air blowing pipes 4. Another end of each of the first pipe 4a and the second pipe 4b of the air blowing pipes 4 may be opened for air outlet. In addition, another end of each of the first pipe 4a and the second pipe 4b may have, for example, a lid for prevention of inverse air leakage. Moreover, the orientation of the holes of the air outlet holes 41 is not limited to the present embodiment illustrated as extending substantially perpendicular to the direction of extension of the plant 11 as long as it is possible to supply air to the aboveground space B where the plant 11 is provided.

The first pipe 4a and the second pipe 4b are provided in substantially parallel to each other in the aboveground space B above the growth tanks 1. In other words, both the first pipe 4a and the second pipe 4b are disposed to extend along the same virtual line. The first pipe 4a is disposed above the second pipe 4b so that the first pipe 4a is at a position more distant from the growth tanks 1 than the second pipe 4b is. Here, the first pipe 4a is preferably disposed near the illumination 2. In addition, the second pipe 4b is preferably disposed near the growth tanks 1.

The air blow controller 5 is provided on the air blower 3 or the air blowing pipe 4 and controls the blowing parameters in the first pipe 4a and the second pipe 4b. The air blow controller 5 adjusts the blow rate of air sent into the air blowing pipes 4 of the air blower 3 by adjusting, for example, the value of the airflow meter and the valves provided on the first pipe 4a and the second pipe 4b at predetermined intervals. The blow rate may be adjusted automatically or manually. The air blow controller 5 controls the blowing parameters of the wind supplied from the air blower 3 into the air blowing pipes 4 within an appropriate range depending on the growth status of the plant 11 and the aboveground temperature detected by an aboveground temperature detector 6. Examples of the blowing parameters include a flow rate, a wind speed, and a wind pressure.

In the present embodiment, the air blower 3 is, for example, separated into two air blowers 3a and 3b and is provided near the ceiling of the housing 200. Three growth tanks 1 are disposed in a line between the air blowers 3a and 3b. The first pipe 4a is attached to the air blower 3a, and the second pipe 4b is attached to the air blower 3b. The longitudinal direction of the air blowing pipes 4 is aligned in the same direction as the direction of arrangement of the growth tanks 1.

The first pipe 4a is disposed closer to the ceiling of the housing 200 than the second pipe 4b is. The first pipe 4a is disposed near the illumination 2. The second pipe 4b is disposed above the first pipe 4a when viewed from the growth tanks 1 and in parallel with the first pipe 4a. A plurality of, for example nine air outlet holes 41 are provided in the longitudinal direction of the first pipe 4a and the second pipe 4b at equal intervals. The air blow controller 5 refers to the valves provided on the first pipe 4a and the second pipe 4b. Automatic or manual adjustment of the flow rate, the wind speed, or the wind pressure determines the most appropriate blowing parameters for the corresponding pipes. It is preferable that the blowing parameters can be adjusted for each growth tank 1. The same number of valves as that of the growth tanks 1 is provided on each of the first pipe 4a and the second pipe 4b.

In addition, the aboveground temperature detector 6 may be provided in the aboveground space B. The aboveground temperature detector 6 detects the temperature and the humidity of the atmosphere of the aboveground space B. The blowing parameters are adjusted depending on the information on the detected temperature and humidity. The aboveground temperature detector 6 is, for example, a sensor provided on the upper surface of the ground surface section 16. The position of the aboveground temperature detector 6 disposed is not limited to that of the present embodiment, but may be any position in the aboveground space B. The temperature detector 6 may be positioned on the plant 11 itself or a combination of temperature detectors 6 may be provided on the plant 11 and the upper surface of the ground surface section 16.

In addition, the air blowing pipe 4 provided near and above the growth tanks 1 (for example, the second pipe 4b) may include the carbon dioxide supplier 8. The carbon dioxide supplier 8 makes it possible to promote photosynthesis by supplying carbon dioxide to the plant 11.

Note that the housing 200 preferably has air conditioning equipment 7 such as an air conditioner provided therein. The air conditioning equipment 7 maintains constant levels of the temperature and the humidity of the aboveground space B in the housing 200.

Note that the ground surface section 16 and the cultivation section 13 may have any form as long as the configuration allows the spraying units 18 to supply water or the nutrient solution 12 to the plant 11 while suppressing illumination of light to the underground space A.

Note that the form of the air blower 3 and the air blowing pipes 4 is not limited to the present embodiment as long as it is possible to uniformly supply air into the aboveground space B. Likewise, the number and the shape of the air blow controllers 5 and the air outlet holes 41 provided in the air blowing pipes 4 are not limited to the present embodiment as long as it is possible to supply air to the vicinity of the plant 11 and to the vicinity of the illumination 2 in the aboveground space B. The air outlet holes 41 and the air blow controllers 5 are preferably provided for each of the growth tanks 1.

Note that although the configuration is such that a plurality of growth tanks 1 are arranged in the housing 200, the number of tanks arranged is not limited to that of the present embodiment as long as the tanks are arranged in the line direction of the air blowing pipes 4.

### [Methods and Operations of Hydroponic Cultivation Apparatus in Present Embodiment]

In the present embodiment, the above configuration supplies air to the plant 11 with the following methods and operations, making it possible to send the most appropriate air to the plant 11.

In the present embodiment, the air is supplied from the air blower 3 through the first pipe 4a and the second pipe 4b to the air outlet holes 41 and further from the air outlet holes 41 into the aboveground space B. Use of the first pipe 4a and the second pipe 4b makes it possible to suppress dispersion of the air sent from the air blower 3 to the entire aboveground space B and to intensively send the air to the distant growth tanks 1.

In addition, the air is supplied such that the wind directions of the air sent into the first pipe 4a and the air sent into the second pipe 4b are the direction of arrangement of the growth tanks 1 in which the plant 11 is grown and are opposite to each other, in other words, substantially opposing directions.

The blowing parameters of the air flowing through the air blowing pipes 4 decreases as the distance from the air blower 3 increases. Specifically, in the right and left directions of Fig. 1, the blowing parameters of the air flowing through the first pipe 4a decrease towards the right side. The blowing parameters of the air flowing through the second pipe 4b decrease towards the left side. For those reasons, in Fig. 1 and Fig. 2, the sum of the blowing parameters in the first pipe 4a and the blowing parameters in the second pipe 4b is symmetric. This makes it possible to send air to the aboveground space B with uniform blowing parameters in the direction along the first pipe 4a and the second pipe 4b. Specifically, if the wind directions are facing directions, that is, substantially opposite directions, the total value of the blowing parameters of the air sent from both the first pipe 4a and the second pipe 4b to the aboveground space B is constant in the direction along the first pipe 4a and the second pipe 4b. As a result, it is possible to suppress non-uniform supplying of air attributed to the positions of the growth tanks 1 disposed. Note that in Fig. 1 and Fig. 2, symmetry means that the total value of the above-described two blowing parameters is in mirror symmetry where the plane of symmetry is the virtual plane perpendicular to the first pipe 4a and the second pipe 4b parallel to each other.

In addition, the configuration capable of adjusting the blowing parameters for each of the first pipe 4a and the second pipe 4b makes it possible to adjust the air to be sent into the aboveground space B depending on the degree of growth of the plants.

In addition, if the blowing parameters in the first pipe 4a are greater than the blowing parameters in the second pipe 4b, it is possible to stir the heat generated near the illumination 2 in the aboveground space B. As a result, the temperature and the humidity inside the aboveground space B can be kept constant, that is, uniform. The blowing parameters in the second pipe 4b set to be less than those of the first pipe 4a make it possible to reduce the stress on the plant 11 exerted by the air sent into the aboveground space B. The blowing parameters can be adjusted depending on the growth environment as described above. Therefore, it is possible to adjust the temperature and the humidity at the levels most appropriate for the growth of the plant 11, allowing creation of a favorable growth environment.

Furthermore, it is preferable for the air blowing pipe 4, equipped with the carbon dioxide supplier 8 which supplies carbon dioxide, to be able to adjust the concentration of carbon dioxide in the air and to supply the adjusted air to the aboveground space B.

Note that the configuration of the air blowing pipe 4 is not limited to that of the present embodiment as long as the total value of the blowing parameters in the first pipe 4a and the second pipe 4b is substantially symmetric. Note, here too, that symmetry means that the total value of the above-described two blowing parameters is in mirror symmetry where the plane of symmetry is the virtual plane perpendicular to the first pipe 4a and the second pipe 4b parallel to each other.

### [Effects and the Like]

As described above, the hydroponic cultivation apparatus 100 in the present embodiment includes the growth tanks 1 in which the plant 11 is grown, the air blower 3 which supplies wind, and the air blowing pipes 4 which guide the wind sent from the air blower 3 to the plant 11. The air blowing pipes 4 include the first pipe 4a and the second pipe 4b that are substantially parallel to each other. Each of the first pipe 4a and the second pipe 4b is provided with a plurality of air outlet holes 41 in the pipe longitudinal direction and supplies air from the air outlet holes 41 to the plant 11. The air blower 3 supplies wind such that the direction of the wind inside the first pipe 4a and the direction of the wind inside the second pipe 4b are substantially opposite directions.

This makes it possible to allow the air to flow into the growth tanks 1 through the air blowing pipes 4 regardless of the size of the facility. In addition, if air is allowed to flow in substantially opposite directions, it is possible to uniformly supply air into the aboveground space B and to enhance the uniformity of the degree of growth regardless of the positions of the plants 11.

In addition, it is preferable to further include the air blow controller 5 which controls at least one of the blowing parameters of the flow rate, the wind speed, and the wind pressure for the wind sent into the first pipe 4a and the second pipe 4b.

This makes it possible to adjust the supplying of air depending on the temperature and the humidity around the plant 11 and on the growth status of the plant 11, making it possible to perform culture in the most appropriate air environment.

In addition, the first pipe 4a is provided above the second pipe 4b so that the first pipe 4a is at a position more distant from the growth tanks 1 than the second pipe 4b is. Moreover, each of the blowing parameters in the first pipe 4a is preferably a value greater than the corresponding blowing parameter of the second pipe 4b. This makes it possible to supply air into the aboveground space B without exerting stress on the plant 11. Thus, it is possible to grow the plant 11 in a favorable environment.

Additionally, the air blowing pipes 4 preferably further include the carbon dioxide supplier 8 which supplies carbon dioxide. This makes it possible to supply air useful for synthesis of the plant 11 to promote the growth of the plant 11.

In summary of the above description, the hydroponic cultivation apparatus 100 in the present embodiment includes the growth tanks 1 in which the plant 11 is grown, the air blower 3 which supplies wind, and the air blowing pipes 4 which guide the wind sent from the air blower 3 to the plant 11. The air blowing pipes 4 include the first pipe 4a and the second pipe 4b substantially parallel to each other. Each of the first pipe 4a and the second pipe 4b is provided with a plurality of air outlet holes 41 in the pipe longitudinal direction, and the air blower 3 supplies wind to the plant 11.

The hydroponic cultivation method of the present embodiment includes the step of guiding wind to the plant 11 by the air blower 3 such that the wind direction inside the first pipe 4a and the wind direction inside the second pipe 4b are substantially opposite directions. This makes it possible to allow air to flow into the entire aboveground space B regardless of the size of the aboveground space B. In addition, air is uniformly supplied to the entire aboveground space B, making it possible to keep the temperature, the humidity, and the concentration of carbon dioxide constant, that is, uniform in the entire aboveground space B. Moreover, it is possible to enhance the uniformity of the degree of growth regardless of the positions of the plants 11.

### [Modified Examples]

As above, a description has been provided for the hydroponic cultivation apparatus 100 according to the present invention based on the embodiment. However, the present invention is not limited to the embodiment described above.

In the embodiment described above, for example, the plurality of air outlet holes 41 are provided in the first pipe 4a and the second pipe 4b such that they are arranged in the longitudinal direction of the pipes at equal intervals. However, the plurality of air outlet holes 41 may be provided on the first pipe 4a and the second pipe 4b irregularly, that is, at unequal intervals. In this case, the first pipe 4a and the second pipe 4b are symmetric in shape in Fig. 1 and Fig. 2. Also, the total value of the blowing parameters of the air in the first pipe 4a and the second pipe 4b sent from the air blower 3 is preferably substantially symmetric in Fig. 1 and Fig. 2. Note that in Fig. 1 and Fig. 2, symmetry means that the first pipe 4a and the second pipe 4b are in mirror symmetry where the plane of symmetry is the virtual plane perpendicular to the first pipe 4a and the second pipe 4b parallel to each other. Moreover, in Fig. 1 and Fig. 2, symmetry means that the total value of the above-described two blowing parameters is in mirror symmetry where the plane of symmetry is the virtual plane perpendicular to the first pipe 4a and the second pipe 4b parallel to each other.

Furthermore, the plurality of growth tanks 1 in the above-described embodiment are arranged in the horizontal direction in the drawings. However, they may be arranged in the vertical direction by use of, for example, shelves as long as the plants 11 are capable of performing photosynthesis receiving light from the illumination 2. In this case, the air blowing pipes 4 are provided substantially in parallel with the vertical direction in which the growth tanks 1 are arranged. This makes it possible to uniformly supply wind to the inside of the facility even when the facility is long in the longitudinal direction.

The present invention also includes forms obtained through various modifications of embodiments and modified examples which those skilled in the art conceive of and forms achieved by desirably combining constituents and functions of embodiments within a scope not departing from the gist of the present invention.

### REFERENCE SIGNS LIST

- 100: hydroponic cultivation apparatus
- 1: growth tank
- 3, 3a, 3b: air blower
- 4: air blowing pipe
- 4a: first pipe
- 4b: second pipe
- 5: air blow controller

## Claims

1. A hydroponic cultivation apparatus comprising:
a growth tank in which a plant is grown;
an air blower which supplies wind; and
an air blowing pipe which guides the wind sent from the air blower to the plant, wherein
the air blowing pipe includes a first pipe and a second pipe which extend in the same virtual line,
each of the first pipe and the second pipe is provided with a plurality of air outlet holes in a pipe longitudinal direction and supplies the wind from the air outlet holes to the plant, and
the air blower supplies the wind such that a direction of the wind inside the first pipe and a direction of the wind inside the second pipe are opposite directions.

2. The hydroponic cultivation apparatus according to claim 1, further comprising
an air blow controller which controls at least one of blowing parameters including a flow rate, a wind speed, and a wind pressure for the wind sent into each of the first pipe and the second pipe.

3. The hydroponic cultivation apparatus according to claim 1 or 2, wherein
the first pipe is provided above the second pipe so that the first pipe is at a position more distant from the growth tank than the second pipe is, and
a blowing parameter in the first pipe has a value greater than the blowing parameter in the second pipe.

4. The hydroponic cultivation apparatus according to any one of claims 1 to 3, wherein
the air blowing pipe further includes a carbon dioxide supplier which supplies carbon dioxide to be contained in the wind.

5. The hydroponic cultivation apparatus according to any one of claims 1 to 4, wherein
the first pipe and the second pipe are disposed in parallel with each other, and
the direction of the wind inside the first pipe and the direction of the wind inside the second pipe are opposite directions.

6. A hydroponic cultivation method using a hydroponic cultivation apparatus which includes
a growth tank in which a plant is grown;
an air blower which supplies wind; and
an air blowing pipe which guides wind sent from the air blower to the plant, wherein
the air blowing pipe includes a first pipe and a second pipe which extend in the same virtual line,
each of the first pipe and the second pipe is provided with a plurality of air outlet holes in a pipe longitudinal direction, and the air blower supplies the wind to the plant, comprising the step of:
guiding the wind to the plant by the air blower such that a direction of the wind inside the first pipe and a direction of the wind inside the second pipe are opposite to each other.
